# EUROPÄISCHE PATENTSCHRIFT

(11) **EP 3 192 219 B1**
(45) Veröffentlichungstag und Bekanntmachung des Hinweises auf die Patenterteilung: **20.02.2019**
(21) Anmeldenummer: 15750018.2
(22) Anmeldetag: 04.08.2015
(51) Int. Cl.: H04L 12/413, H04L 12/40, H04L 1/00

(54) **VERFAHREN ZUR SERIELLEN ÜBERTRAGUNG EINES RAHMENS ÜBER EIN BUSSYSTEM VON EINEM SENDER ZU MINDESTENS EINEM EMPFÄNGER UND TEILNEHMERN EINES BUSSYSTEMS**
METHOD FOR SERIALLY TRANSMITTING A FRAME FROM A TRANSMITTER TO AT LEAST ONE RECEIVER AND PARTICIPANTS OF A BUS SYSTEM VIA A BUS SYSTEM
PROCÉDÉ DE TRANSMISSION EN SÉRIE D'UNE TRAME SUR UNE LIGNE DE BUS DEPUIS UN ÉMETTEUR VERS AU MOINS UN RÉCEPTEUR ET ABONNÉS D'UN SYSTÈME DE BUS

(30) Priorität: 08.09.2014 DE 102014217926; 20.05.2015 DE 102015209196
(43) Veröffentlichungstag der Anmeldung: 19.07.2017
(73) Patentinhaber: Robert Bosch GmbH, 70442 Stuttgart (DE)
(72) Erfinder: HARTWICH, Florian, 72762 Reutlingen (DE); BAILER, Franz, 72116 Moessingen (DE); MUTTER, Arthur, 73765 Neuhausen (DE); SCHEUING, Jan, 74336 Brackenheim (DE)
(86) Internationale Anmeldenummer: PCT/EP2015/067932
(87) Internationale Veröffentlichungsnummer: WO 2016/037768

(56) Entgegenhaltungen:
- US-A1- 2006 123 176
- US-A1- 2014 201 410
- US-A1- 2014 223 258

## Beschreibung

### Stand der Technik

Für die Kommunikation zwischen Sensoren und Steuergeräten in Fahrzeugen, insbesondere Automobilen, kann beispielsweise das CAN-Bussystem verwendet werden. Beim CAN-Bussystem werden Rahmen mittels des CAN- und/oder CAN FD Protokolls übertragen, wie es in dem aktuellen Committee Draft der ISO11898-1 oder der Spezifikation "CAN with Flexible Data-Rate, Specification Version 1.0 (released April 17th, 2012)" als CAN Protokoll-Spezifikation mit CAN FD beschrieben ist.

CAN FD Rahmen (Frames) oder Nachrichten haben nach einem initialen Start of Frame Bit (SOF-Bit) mit dominantem Pegel, das den Beginn des Rahmens signalisiert, ein Bit 28 bis Bit 18 und gegebenenfalls noch ein Bit 17 bis Bit 0 für einen Identifizierer oder Identifier des CAN FD Rahmens. Daher werden das Bit 28 bis Bit 0 auch ID28, ID 27, usw. genannt.

In CRC-Verfahren (CRC = Cyclic Redundancy Check = zyklische Redundanzprüfung) der CAN FD Nachrichten oder Rahmen wurde eine Schwäche erfasst. Die Schwäche betrifft nur CAN FD Rahmen mit einem Identifier, der mit vier dominanten Bits beginnt. Diese vier dominanten Bits, zusammen mit dem dominanten Start-of-Frame Bit, erzeugen eine Stopf- oder Stuff-Bedingung (stuff condition), aufgrund welcher ein rezessives Stuff-Bit zwischen dem vierten und dem fünften Identifier-Bit eingefügt wird. Durch diese vorbestimmte Regel zum Einfügen der Stuff-Bits kann verhindert werden, dass Bitfolgen mit mehr als fünf gleichen Bits irrtümlich als beispielsweise eine Signalisierung eines Rahmenendes "End of Frame" interpretiert werden, oder dass durch das Fehlen von Signalflanken bzw. Pegelwechseln zwischen den Bits die Busteilnehmer die Synchronisierung verlieren. Denn bei CAN und CAN FD werden Signalflanken bzw. Pegelwechsel zur Synchronisierung der Busteilnehmer herangezogen

Falls in dem oben genannten Fall der vier dominanten Bits das vorausgehende dominante Start-of-Frame Bit (lokal in einem Empfänger) mit einem rezessiven Bit überschrieben wird, interpretiert dieser Empfänger das erste dominante Identifier-Bit als Start-of-Frame Bit. Es gibt keine Stuff-Bedingung in dem Empfänger, wenn er das rezessive Stuff-Bit empfängt, so dass der Empfänger das rezessive Stuff-Bit als das vierte Identifier-Bit akzeptieren wird. Das folgende Bit wird als das fünfte Identifier-Bit akzeptiert und der Empfänger wird wieder mit dem Sender in Phase sein.

Die Schwäche besteht darin, dass in diesem Fall die CRC-Prüfung das geänderte vierte Identifier-Bit nicht erfassen wird; ein gesendeter Identifier von beispielsweise 0x001 wird als0x081 empfangen. Dies tritt auf, wenn der Identifier mit vier dominanten ,0'-Bits beginnt und das dominante Start-of-Frame Bit überschrieben wird. Die sich daraus ergebende Konsequenz wird sein, dass das vierte Identifier-Bit anstelle von ,0' als ,1' empfangen wird. Hierbei sind sowohl 11-Bit-Identifier, wie bei CAN FD Rahmen im Basisformat (base format), als auch 29-Bit-Identifier, wie bei CAN FD Rahmen im erweiterten Format (extended format), und sowohl CAN FD Rahmen mit der 17-Bit-CRC als auch CAN FD Rahmen mit der 21-Bit CRC betroffen.

Die Schwäche des CRC-Verfahrens wird durch den Initialisierungsvektor von '00000000000000000' für den CRC-Generator verursacht. Das erste führende ,0' Bit wird das CRC-Generatorregister nicht ändern, so dass es durch die CRC-Prüfung nicht erfasst wird, wenn vor dem ersten rezessiven Bit in dem Arbitrationsfeld (das gesendete Stuff-Bit, das von dem Empfänger mit dem Bit-Fehler als das vierte Identifier-Bit angesehen wird) ein Bit weniger vorhanden ist. Außerdem wird das fehlende Bit an dem Beginn des Rahmens nicht als ein Formatfehler erfasst, da das Stuff-Bit als das fehlende Identifier-Bit akzeptiert wird.

Zusammengefasst bedeutet das:
Bei Classic CAN werden Stuff-Bits für die CRC-Erzeugung nicht berücksichtigt.
Lediglich Paare von Bitfehler-Erzeugungs-/Beseitigungs-Stuff-Bedingungen können die Hammingdistanz (HD) auf 2 reduzieren.

Bei CAN FD mit den längeren CRC-Checksummen (CRC-17 und CRC-21) werden Stuff-Bits von der CRC-Erzeugung umfasst. Ein Problem kann entstehen, wenn vom Empfänger das Start-of-Frame Bit verfälscht wird.

In den folgenden beiden Fällen kann es vorkommen, dass die CRC des CAN FD Rahmens einen verfälschten Identifizierer nicht erfasst. Das bedeutet, dass der Empfänger den verfälschten Rahmen als gültigen Rahmen akzeptiert.

### Fall 1a: Sender sendet ID28-ID25 = "0000"

Wenn der Empfänger ein verkürztes Start-of-Frame Bit erfasst, können Identifier, die mit ID28-ID25 = "0000" beginnen, in ID28-ID25 = "0001" verfälscht werden. Der Grund dafür liegt darin, dass der Empfänger Start-of-Frame nicht oder zu spät erkennt und daher ID28 als Start-of-Frame interpretiert. Damit werden die ersten vier Identifier Bits aufgrund des vom Sender nach ID25 eingefügten Stuff-Bits zu ID28-ID25 = "0001" verfälscht, alle nachfolgenden Identifier Bits werden korrekt empfangen. Der Sender erkennt beim Zurücklesen des Start-of-Frame vom Bus keinen Fehler.

Das erforderliche Verkürzen hängt von der CAN-Taktfrequenzbeziehung zwischen Sender und Empfänger ab. Vergleiche die Beispiele für Details.

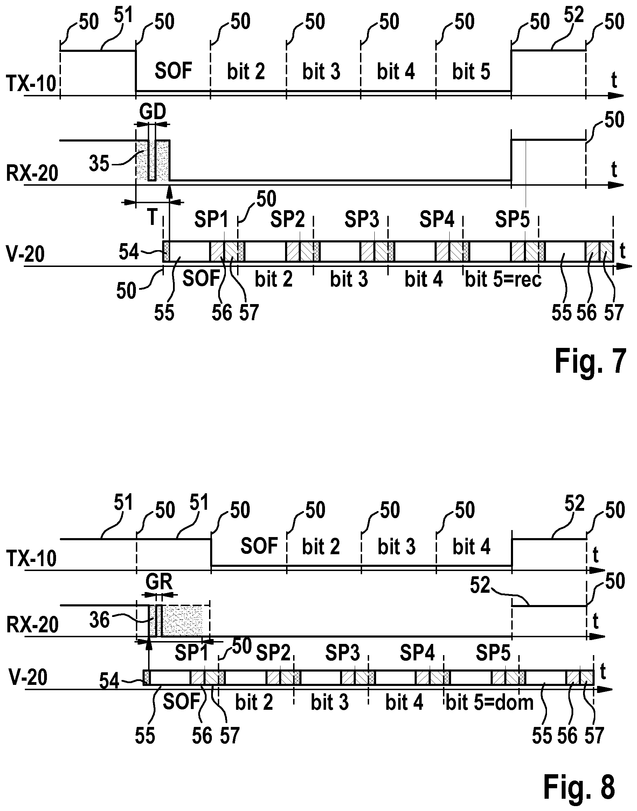

Das verfälschte Bussignal kann dominante Störimpulse enthalten, solange sie nicht von dem empfangenden CAN-Knoten erfasst werden. Das verfälschte Bussignal kann rezessive Störimpulse enthalten, solange das Bit vor dem Start-of-Frame-Bit, das von dem Sender gesendet wurde, durch den empfangenden CAN-Knoten dominant abgetastet wird. Dies ist anhand von Fig. 7 und Fig. 8 später noch genauer erläutert.

Falls zum Beispiel der CAN-Takt in den Teilnehmerstationen oder Knoten fRX_Knoten == fTX_Knoten ist, dann ist eine Verkürzung/Verfälschung des Start-of-Frame Bits von "phase_seg2 + ε" ausreichend, um das Problem hervorzurufen. Mit 1 Mbit/s und einem Abtastpunkt (Sample Point = SP) von 80% ist eine Verkürzung um 205 ns ausreichend, um das Problem zu erzeugen. Dies ist anhand von Fig. 7 und Fig. 8 später noch genauer erläutert.

### Fall 1b: Sender sendet ID28-ID25 = "0001"

Wenn andererseits der Empfänger z.B. durch einen dominanten Störimpuls ein dominantes Bit in der Bitzeit erfasst, bevor das gesendete Start-of-Frame Bit ankommt, können Identifier, die mit ID28-ID25 = "0001" beginnen, in ID28-ID25 = "0000" verfälscht werden. Der Grund dafür liegt darin, dass der Empfänger das vom Sender gesendete Start-of-Frame-Bit als ID28 erkennt. Dadurch missinterpretiert der Empfänger die "1" als Stuff-Bit und entfernt diese. Damit werden die ersten vier Identifier Bits zu ID28-ID25 = "0000" verfälscht. Alle nachfolgenden Identifier Bits werden korrekt empfangen.

Zusammengefasst zeigt Tabelle 1, wie die beiden kritischen Werte der Identifier-Bits ID28 bis ID25 von "0000" und "0001" auf dem Weg zum Empfänger verfälscht werden müssen, damit der Fehler vom CRC des Empfängers nicht erkannt wird.

**Tabelle 1**

| Gesendet | | | | | Empfangen | | | |
|---|---|---|---|---|---|---|---|---|
| ID28 | ID27 | ID26 | ID25 | | ID28 | ID27 | ID26 | ID25 |
| 0 | 0 | 0 | 0 | → | 0 | 0 | 0 | 1 |
| 0 | 0 | 0 | 1 | → | 0 | 0 | 0 | 0 |

Dasselbe Problem kann auch innerhalb eines CAN FD Rahmens auftreten, falls eine Sequenz von vier oder fünf dominanten Bits bei der Position innerhalb eines Rahmens beginnen, wenn alle Bits des CRC-Generatorregisters auf Null stehen. Anders ausgedrückt, ein vergleichbares Problem kann auch innerhalb eines CAN FD Rahmens entstehen, wenn ein rezessives Bit nach einer Folge von vier gesendeten dominanten Bits vom Empfänger wegen einer Verkürzung eines Bits oder einer Verschiebung in der Synchronisierung unter den Teilnehmern als Stuff-Bit missinterpretiert wird und gleichzeitig zufällig der Zwischen-CRC-Registerwert gleich "0...0" ist. Der Zwischen-CRC-Registerwert ist der jeweils in dem dafür vorgesehenen CRC-Register vorliegende Wert der CRC-Checksumme. Mit jedem vor dem CRC-Feld gesendeten bzw. empfangenen Bit im Sender bzw. Empfänger wird entsprechend der Vorschrift des jeweils verwendeten CRC-Polynoms der Inhalt des CRC-Registers neu berechnet. Der am letzten Bit des Datenfeldes vorliegende Inhalt des Registers wird dann im CRC-Feld des Rahmens vom Sender an den Empfänger zur Prüfung verschickt.

Classic CAN Rahmen sind nicht betroffen, da dort die Stuff-Bits von der CRC-Berechnung ausgenommen sind.

Die Patentanmeldung DE102011080476A1 offenbart ein Verfahren, bei dem vom Sender zumindest in Teile des Rahmens Fixed-Stuff-Bit-Sequenzen aus einem oder mehreren Bits in den Rahmen eingefügt werden. Das erste eingefügte Bit der Fixed-Stuff-Bit-Sequenz (beziehungsweise das einzelne eingefügte Fixed-Stuff-Bit) hat vorzugsweise einen zu dem vorhergehenden Bit inversen Wert. Die Fixed-Stuff-Bit-Sequenzen (beziehungsweise Fixed-Stuff-Bits) treten an vorgegebenen Positionen des Rahmens auf. Im Gegensatz dazu werden im Classical CAN die Stuff-Bits abhängig von den Werten mehrerer vorausgegangenen Bits eingefügt und haben daher keine festgelegten Positionen.

### Offenbarung der Erfindung:

Daher ist es Aufgabe der vorliegenden Erfindung, ein Verfahren zur seriellen Übertragung eines Rahmens über ein Bussystem von einem Sender zu mindestens einem Empfänger und eine Teilnehmerstation für ein Bussystem bereitzustellen, welches Verfahren und welche Teilnehmerstation die zuvor genannten Probleme lösen. Insbesondere sollen ein Verfahren zur seriellen Übertragung eines Rahmens über ein Bussystem von einem Sender zu mindestens einem Empfänger und eine Teilnehmerstation für ein Bussystem bereitgestellt werden, bei welchen die Sicherheit der Datenübertragung zwischen Teilnehmern eines Bussystems gegenüber bisherigen Verfahren weiter erhöht wird.

Die Aufgabe wird durch ein Verfahren zur seriellen Übertragung eines Rahmens über eine Busleitung von einem Sender zu mindestens einem Empfänger mit den Merkmalen des Anspruchs 1 gelöst. Bei dem Verfahren werden vom Sender in die Rahmen Stuff-Bits zur Erzeugung zusätzlicher Signalflanken und abhängig von den Werten mehrerer vorausgegangener Bits eingefügt, wobei der Sender des Rahmens die Stuff-Bits zählt, die abhängig von den Werten mehrerer vorausgegangener Bits eingefügt werden, und wobei die Anzahl gezählter Stuff-Bits in dem gesendeten Rahmen mit übertragen wird.

Mit dem Verfahren ist eine Möglichkeit bereitgestellt, wie erkannt werden kann, dass ein Bit-Fehler aufgetreten ist, wie er im Stand der Technik beschrieben ist, der also nicht von der CRC-Prozedur aufgedeckt werden kann.

Bei dem Verfahren werden bei CAN FD Implementationen Stuff-Bits gezählt, der Zählerstand wird im Rahmen übertragen und anschließend vom Empfänger geprüft.

Der Vorteil dieses Verfahrens liegt darin, dass die erkannte Schwäche der CRC-Prozedur durch ein zusätzliches Prüfverfahren ausgeglichen wird. Dieses Verfahren hat, anders als andere Lösungs-Vorschläge, nur minimale Auswirkungen auf die Nutz-Datenrate.

Die Verwendung des beschriebenen Verfahrens lässt sich einerseits über das Datenblatt/Handbuch des CAN-Protokoll-Controllers nachweisen, andererseits durch das Verhalten des Controllers bzw. der Kommunikationssteuereinrichtung im Netzwerk bzw. Bussystem. Die hier beschriebene CAN FD-Protokoll-Variante soll für CAN und für TTCAN Netzwerke verwendet werden.

Vorteilhafte weitere Ausgestaltungen des Verfahrens sind in den abhängigen Patentansprüchen angegeben.

Es ist möglich, dass zusätzlich zu der Information über die Anzahl gezählter Stuff-Bits eine weitere Absicherungsinformation betreffend die gezählte Anzahl von Stuff-Bits in dem gesendeten Rahmen mit übertragen wird.

Der Empfänger des Rahmen kann die Stuff-Bits abhängig von den Werten mehrerer vorausgegangener Bits zählen und mit der Information vergleichen, die über die Anzahl gezählter Stuff-Bits in dem gesendeten Rahmen mit übertragen wird, und der Empfänger kann den empfangenen Rahmen verwerfen, wenn die vom Empfänger in dem empfangenen Rahmen gezählten Stuff-Bits ungleich der Information sind, die in dem gesendeten Rahmen über die Anzahl gezählter Stuff-Bits mit übertragen werden.

Vorzugsweise werden in einem ersten Teil des Rahmens Stuff-Bits abhängig von den Werten mehrerer vorausgegangener Bits eingefügt, wobei in einem zweiten Teil des Rahmens Stuff-Bits als Fixed-Stuff-Bits an festgelegten Positionen eingefügt werden können, wobei der Sender des Rahmens die Stuff-Bits zählt, die vor dem Bereich liegen, in dem auf das Fixed-Stuff-Bit Verfahren umgeschaltet wird, und wobei eine Information über die Anzahl gezählter Stuff-Bits in dem gesendeten Rahmen mit übertragen wird.

Möglicherweise weist der Rahmen einen Kopfteil, einen Datenteil und einen Schlussteil auf, wobei der Kopfteil einen Identifier umfasst, wobei der Rahmen eine CRC-Checksumme umfasst, und wobei die Information über die Anzahl gezählter Stuff-Bits im Schlussteil des gesendeten Rahmens vor der CRC-Checksumme mit übertragen wird.

Bevorzugt kann die Information über die Anzahl gezählter Stuff-Bits in die Berechnung der CRC-Checksumme mit eingeschlossen werden.

In einer speziellen Ausgestaltung des Verfahrens kann zwischen der Information über die Anzahl gezählter Stuff-Bits und der CRC-Checksumme ein Fixed-Stuff-Bit eingefügt werden, das als Parity-Bit eine Absicherungsinformation über die Anzahl gezählter Stuff-Bits enthält.

In einer weiteren speziellen Ausgestaltung des Verfahrens wird zum Zählen der Stuff-Bits ein 3-Bit-Zähler verwendet.

Die zuvor genannte Aufgabe wird zudem durch eine Teilnehmerstation für ein Bussystem nach Patentanspruch 9 gelöst. Die Teilnehmerstation umfasst eine Sende-/Empfangseinrichtung zum Senden eines Rahmens an und/oder Empfangen eines Rahmens von eine/r weitere/n Teilnehmerstation des Bussystems, mit welchem der Rahmen mittels serieller Übertragung über eine Busleitung von einem Sender zu mindestens einem Empfänger übertragbar ist, und eine Sicherungseinrichtung zur Sicherung einer Anzahl von in den Rahmen eingefügten Stuff-Bits, wobei die Sende-/Empfangseinrichtung ausgestaltet ist, vor dem Senden eines Rahmens in den Rahmen gemäß einer vorbestimmten Regel Stuff-Bits zur Erzeugung zusätzlicher Signalflanken und abhängig von den Werten mehrerer vorausgegangener Bits einzufügen und/oder beim Auswerten eines empfangenen Rahmens die Stuff-Bits wieder zu entfernen, und wobei die Sicherungseinrichtung ausgestaltet ist, die Stuff-Bits zu zählen, die abhängig von den Werten mehrerer vorausgegangener Bits eingefügt werden, und die Anzahl gezählter Stuff-Bits in den Rahmen einzufügen, so dass die Information in dem gesendeten Rahmen mit übertragen wird.

Die Teilnehmerstation kann Teil eines Bussystems sein, das zudem eine Busleitung und mindestens zwei Teilnehmerstationen aufweist, welche über die Busleitung derart miteinander verbindbar sind, dass sie miteinander kommunizieren können, wobei mindestens eine der mindestens zwei Teilnehmerstationen die zuvor beschriebene Teilnehmerstation ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine schematische Darstellung eines Aufbaus eines Rahmens bei dem Bussystem gemäß Fig. 1l;
Fig. 3 bis Fig. 6 jeweils das Format von CAN FD Rahmen mit der Platzierung der ersten vier Identifier Bits (ID28-ID25) gemäß dem aktuellen Committee Draft der ISO 11898-1;
Fig. 7 und Fig. 8 jeweils ein Zeitverlaufsdiagramm zur Darstellung der Taktverhältnisse zwischen Sender und Empfänger am Beginn eines übertragenen Rahmens in dem Bussystem gemäß Fig. 1.
Fig. 9 ein Beispiel für einen Rahmen gemäß dem ersten Ausführungsbeispiel;
Fig. 10 ein Zeitverlaufsdiagramm zur Darstellung der Taktverhältnisse zwischen Sender und Empfänger im Inneren eines übertragenen Rahmens in dem Bussystem;
Fig. 11 ein Beispiel für einen Rahmen gemäß einem vierten Ausführungsbeispiel; und
Fig. 12 ein Beispiel für einen Rahmen gemäß einem fünften Ausführungsbeispiel.

In den Figuren sind gleiche oder funktionsgleiche Elemente, sofern nichts anderes angegeben ist, mit denselben Bezugszeichen versehen.

### Erstes Ausführungsbeispiel

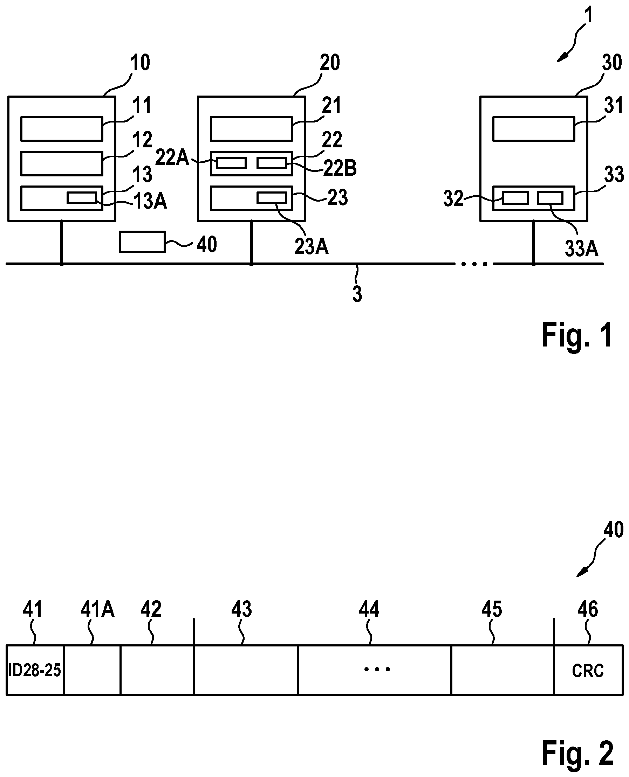

Fig. 1 zeigt in einem ersten Ausführungsbeispiel ein Bussystem 1, das beispielsweise ein CAN FD-Bussystem, sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Busleitung 3, an die eine Vielzahl von Teilnehmerstationen 10, 20, 30 angeschlossen sind. Über die Busleitung 3 können Rahmen 40 in der Form von Signalen zwischen den einzelnen Teilnehmerstationen 10, 20, 30 übertragen werden. Die Teilnehmerstationen 10, 20, 30 können beispielsweise Steuergeräte, Sensoren, Anzeigevorrichtungen, usw. eines Kraftfahrzeugs oder auch industrielle Steueranlagen sein.

Wie in Fig. 1 gezeigt, hat die Teilnehmerstation 10 eine Kommunikationssteuereinrichtung 11, eine Sicherungseinrichtung 12 und eine Sende-/Empfangseinrichtung 13, die einen CRC-Generator 13A aufweist. Selbstverständlich kann die Sicherungseinrichtung 12 auch Teil der Kommunikationssteuereinrichtung 11 sein. Die Teilnehmerstation 20 hat dagegen eine Kommunikationssteuereinrichtung 21, eine Sicherungseinrichtung 22 mit einer CRC-Auswerteeinheit 22A und einer Einfügeeinheit 22B, und eine Sende-/Empfangseinrichtung 23, die einen CRC-Generator 23A aufweist. Die Teilnehmerstation 30 hat eine Kommunikationssteuereinrichtung 31, eine Sicherungseinrichtung 32 und eine Sende-/Empfangseinrichtung 33, welche die Sicherungseinrichtung 32 und eine einen CRC-Generator 33A aufweist. Die Sende-/Empfangseinrichtungen 13, 23, 33 der Teilnehmerstationen 10, 20, 30 sind jeweils direkt an die Busleitung 3 angeschlossen, auch wenn dies in Fig. 1 nicht dargestellt ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der an die Busleitung 3 angeschlossenen Teilnehmerstationen 10, 20, 30. Die Kommunikationssteuereinrichtungen 11, 21, 31 können jeweils wie ein herkömmlicher CAN oder TTCAN oder CAN FD Kontroller ausgeführt sein. Die Kommunikationssteuereinrichtungen 11, 21, 31 können jeweils auch als Teil eines Mikrocontrollers ausgebildet sein, welcher ebenfalls von der jeweiligen Teilnehmerstation 10, 20, 30 umfasst ist. Die Sende-/Empfangseinrichtungen 13, 23, 33 können jeweils wie ein herkömmlicher CAN oder TTCAN oder CAN FD Transceiver ausgeführt sein.

Die Sicherungseinrichtungen 12, 22, 32 können auch als Software-Module ausgeführt sein, welche einen Teil der auf der Teilnehmerstation ablaufenden Software bilden. In diesem Fall wird das Verfahren gemäß der vorliegenden Erfindung vollständig in Software abgebildet.

Fig. 2 zeigt sehr schematisch den Aufbau eines Rahmens 40 ohne das Start of Frame Bit (SOF), das unmittelbar vor dem Rahmen 40 über die Busleitung 3 übertragen wird. Der Rahmen 40 kann ein CAN Rahmen oder ein TTCAN Rahmen sein.

In Fig. 2 hat der Rahmen 40 ein Kopfteil 41, 41A, 42, ein Datenfeld 43, 44, 45, sowie ein Schlussteil 46, welches das Rahmenende bildet. Der Kopfteil 41, 51A, 42 weist in einem ersten Teilabschnitt 41 die ersten vier Bits des Identifiers (ID) 41, 41A, in einem zweiten Teilabschnitt 41A die übrigen Bits des Identifiers 41, 41A und ein Control Feld 42 auf. Das Datenfeld 43, 44, 45 weist in einem ersten Teil 43 ein Byte 0, in einem zweiten Teil 44 weitere Bytes und in einem dritten Teil 45 ein Byte n auf. In dem Schlussteil 46 ist eine CRC-Checksumme oder CRC-Prüfsumme vorgesehen.

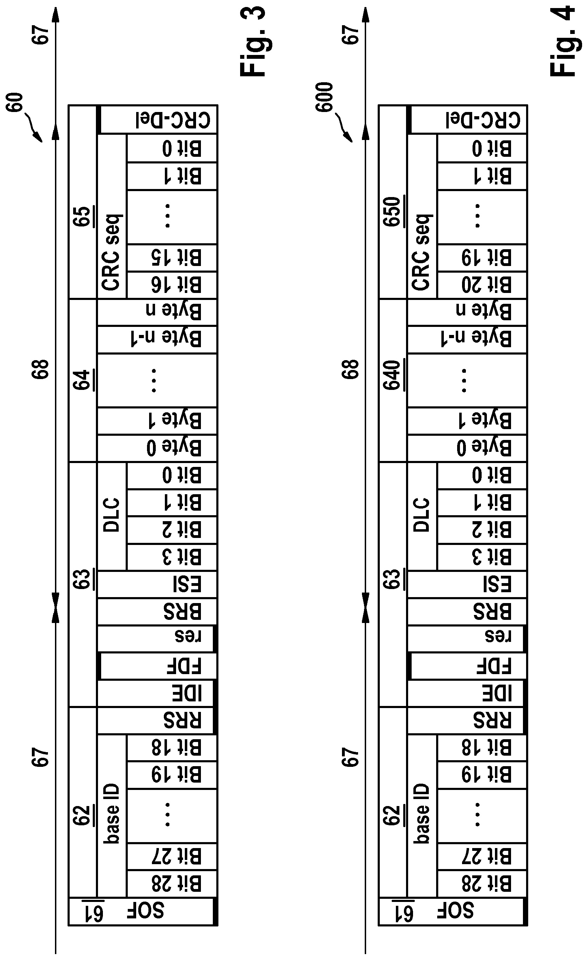

Fig. 3 zeigt einen von einer der Teilnehmerstationen 10, 20, 30 gesendeten Rahmen 60 mit bis zu 16 Datenbytes im CAN FD-Basisformat. Der Rahmen 60 hat ein SOF-Bit 61 sowie mehrere Rahmenfelder, wie ein Arbitrationsfeld 62 (Arbitration field), ein Control Feld 63 (Control field), ein Datenfeld 64 (Data field) und ein Checksummenfeld 65 (CRC field). Das Arbitrationsfeld 62 umfasst in dem base-ID-Feld einen Identifizierer (Identifier) des Rahmens 60. Am Ende des Arbitrationsfelds 62 ist ein RRS-Bit angeordnet. Das Kontrollfeld 63 beginnt mit einem IDE-Bit, das von einem FDF-Bit und dann von einem res-Bit und einem sich daran anschließenden BRS-Bit und dann ESI-Bit gefolgt wird, an das sich ein DLC-Feld anschließt. Das Datenfeld 64 ist nicht vorhanden, wenn das DLC-Feld des Kontrollfelds 63 den Wert 0 hat. Das Checksummenfeld 65 enthält in einem CRC-seq-Feld eine CRC-Checksumme und endet mit einem daran anschließenden CRC-Delimiter CRC-Del. Die genannten Felder und Bits sind aus der ISO-CD-11898-1 bekannt und sind daher hier nicht näher beschrieben.

In Fig. 3 ist die Länge einer Arbitrationsphase 67 bei dem vorliegenden Ausführungsbeispiel angegeben. An die Arbitrationsphase 67 schließt sich die Datenphase 68 an, falls das BRS-Bit in dem Rahmen 60 rezessiv ist. Der Rahmen 60 hat einen Kopfteil 61 bis 63, einen Datenteil 64 und einen Schlussteil 65.

In Fig. 3 bis Fig. 6 sind dominante Bits mit einer breiten Linie am unteren Rand des Rahmens 60 dargestellt. Rezessive Bits sind in Fig. 3 bis Fig. 6 mit einer breiten Linie am oberen Rand des Rahmens 60 dargestellt.

Wie in Fig. 3 gezeigt, hat die zugehörige Kommunikationssteuereinrichtung 11, 21, 31 des Senders den Rahmens 60 derart erstellt, dass das SOF-Bit, das RRS-Bit, das IDE-Bit und das res-Bit dominant sind, wohingegen das FDF-Bit und der CRC-Delimiter CRC-Del rezessiv sind.

Fig. 4 zeigt einen von einer der Teilnehmerstationen 10, 20, 30 gesendeten Rahmen 600 mit mehr als 16 Datenbytes im CAN FD-Basisformat. Der Rahmen 600 ist bis auf ein im Vergleich zu dem Datenfeld 64 längeres Datenfeld 640 und ein im Vergleich zu dem Checksummenfeld 65 längeres Checksummenfeld 650 auf die gleiche Weise aufgebaut wie der Rahmen 60 von Fig. 3. Der Rahmen 600 hat einen Kopfteil 61 bis 63, einen Datenteil 640 und einen Schlussteil 650.

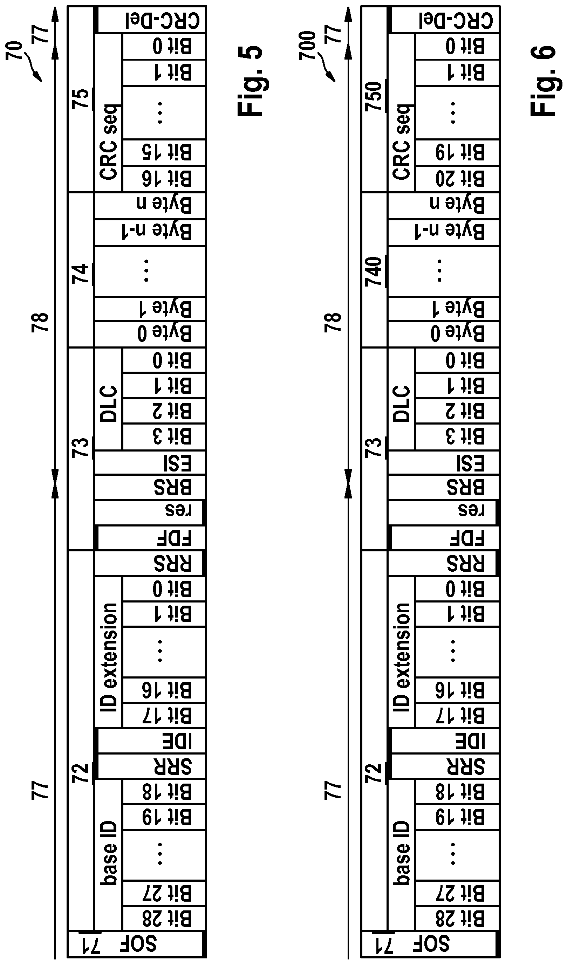

Fig. 5 zeigt einen von einer der Teilnehmerstationen 10, 20, 30 gesendeten Rahmen 70 mit bis zu 16 Datenbytes im CAN FD erweiterten Format (CAN FD extended format). Gemäß Fig. 5 hat der Rahmen 70 ein SOF-Bit 71 sowie mehrere Rahmenfelder, wie ein Arbitrationsfeld 72 (Arbitration field), ein Control Feld 73 (Control field), ein Datenfeld 74 (Data field) und ein Checksummenfeld 75 (CRC field). Das Arbitrationsfeld 72 umfasst in dem base-ID-Feld und dem ID-ext-Feld einen Identifizierer (Identifier) des Rahmens 70. Zwischen dem base-ID-Feld und dem ID-ext-Feld sind ein SRR-Bit und ein IDE-Bit vorgesehen. Am Ende des Arbitrationsfelds 72 ist ein RRS-Bit angeordnet. Das Control Feld 73 beginnt mit einem FDF-Bit, gefolgt von einem res-Bit. Darauf folgt ein BRS-Bit und ein ESI-Bit. Das Control Feld 73 endet mit dem DLC-Feld. Das Datenfeld 74 ist nicht vorhanden, wenn das DLC-Feld des Control Felds 73 den Wert 0 hat. Ansonsten ist der Rahmen 70 auf die gleiche Weise aufgebaut wie der Rahmen 60 von Fig. 3 und hat eine entsprechende Arbitrationsphase 77 und Datenphase 78. Der Rahmen 70 hat einen Kopfteil 71 bis 73, einen Datenteil 74 und einen Schlussteil 75.

Wie in Fig. 5 gezeigt, hat die zugehörige Kommunikationssteuereinrichtung 11, 21, 31 des Senders den Rahmen 70 derart erstellt, dass das SOF-Bit, das RRS-Bit und das res-Bit dominant sind, wohingegen das SRR-Bit, das IDE-Bit und der CRC-Delimiter CRC-Del rezessiv sind

Fig. 6 zeigt einen von einer der Teilnehmerstationen 10, 20, 30 gesendeten Rahmen 700 mit mehr als 16 Datenbytes im CAN FD erweiterten Format (CAN FD extended format). Der Rahmen 700 ist bis auf ein im Vergleich zu dem Datenfeld 74 längeres Datenfeld 740 und ein im Vergleich zu dem Checksummenfeld 75 längeres Checksummenfeld 750 auf die gleiche Weise aufgebaut wie der Rahmen 70 von Fig. 5. Der Rahmen 700 hat einen Kopfteil 71 bis 73, einen Datenteil 740 und einen Schlussteil 750.

Die CRC-Checksumme wird für CAN FD Rahmen 60, 600 im Basisformat, die in Fig. 3 und Fig. 4 gezeigt sind, als CRC-17 bezeichnet. Die CRC-Checksumme wird für CAN FD Rahmen 70, 700 im erweiterten Format, die in Fig. 5 und Fig. 6 gezeigt sind, als CRC-21 bezeichnet.

Fig. 7 zeigt als Beispiel die Verläufe des Sendesignals TX-10 der Teilnehmerstation 10, des Empfangssignals RX-20 der Teilnehmerstation 20 und die Abtastsicht V-20 der Teilnehmerstation 20 jeweils über der Zeit t. Die gestrichelte Linie in Fig. 7 gibt jeweils die Bitgrenze 50 zwischen einzelnen Bits an. Aus Gründen der übersichtlichen Darstellung sind für das Empfangssignals RX-20 und die Abtastsicht V-20 nicht alle gestrichelten Linien für die Bitgrenze 50 mit einem Bezugszeichen versehen.

In Fig. 7 ist der Fall gezeigt, dass auf der Busleitung 3 zunächst ein Leerlaufbit 51 gesendet wird, bevor das Sendesignal TX-10 mit einem Start-of-Frame-Bit (SOF-Bit) beginnt. Darauf folgen ein bit2 bis bit5 mit dem gleichen Pegel wie das Start-of-Frame-Bit. Nach dem bit5 ist ein Stuff-Bit 52 eingefügt.

Demzufolge ergibt sich mit einer nicht dargestellten Verzögerung, die durch die Übertragung des Sendesignals TX-10 über die Busleitung 3 entsteht, das dem Sendesignal TX-10 entsprechende Empfangssignal RX-20. Dieses Empfangssignal RX-20 kann aus verschiedenen Gründen (Hardwarefehler, externe Störungen, elektromagnetische Einstrahlung, etc.) für eine Zeitdauer T einen rezessiven Pegel aufweisen, obwohl das Sendesignal einen dominanten Pegel des SOF-Bits aufweist. In dem so verfälschten Empfangssignal RX-20 können zusätzlich kurze, dominante Störimpulse GD vorhanden sein, welche das Bussignal 35 weiter verfälschen, wie in Fig. 7 gezeigt. Solche Störimpulse GD können beispielsweise ebenfalls durch externe Störungen, insbesondere elektromagnetische Einstrahlung etc., entstehen und werden möglicherweise, zum Beispiel, falls sie kürzer als die kleinste Buszeiteinheit von einem Time Quantum tq sind, durch die empfangende Teilnehmerstation, also hier die Teilnehmerstation 20, nicht erfasst. Das Empfangssignal RX-20 bleibt verfälscht.

Die Teilnehmerstation 20 sieht aufgrund des verfälschten Empfangssignals RX-20 das Signal V-20. Nach der Bitgrenze 50 für das SOF-Bit folgt eine mit dem Bezugszeichen 54 versehene sync_seg-Phase. Darauf folgt eine Übertragungsphase prop_seg, die in Fig. 7 mit dem Bezugszeichen 55 versehen ist. Darauf folgt eine mit dem Bezugszeichen 56 versehene phase_segl und eine mit dem Bezugszeichen 57 versehene phase_seg2. Die Reihenfolge der genannten Phasen 54 bis 57 ist für jedes der Bits gleich.

Die Teilnehmerstation 20 tastet das Empfangssignal RX-20 an Abtastpunkten SP1, SP2, SP3, SP4, SP5 ab. Die Abtastpunkte SP1 bis SP5 liegen zwischen der mit dem Bezugszeichen 56 versehenen phase_segl und der mit dem Bezugszeichen 57 versehenen phase_seg2.

Bei dem in Fig. 7 gezeigten Fall ist der CAN-Takt in den Teilnehmerstationen 10, 20, 30, die auch als Knoten bezeichnet werden, fRX_Knoten == fTX_Knoten. Das heißt, der Empfangstakt entspricht dem Sendetakt. Hier ist eine Verkürzung/Verfälschung des Start-of-Frame-Bits (SOF) von "phase_seg2 + ε" ausreichend, um das hier betrachtete Problem hervorzurufen. Der fünfte Abtastpunkt SP5 ergibt im dargestellten Fall fälschlicherweise einen rezessiven Wert. Mit 1 Mbit/s und einem Abtastpunkt SP (SP = Sample Point) für die Abtastpunkte SP1, SP2, SP3, SP4, SP5 von 80% ist eine Verkürzung um 205 ns ausreichend, um das hier betrachtete Problem zu erzeugen, wie zuvor beschrieben.

In Fig. 8 ist der Fall gezeigt, dass auf der Busleitung 3 zunächst zwei Leerlaufbits 51 nacheinander gesendet werden, bevor das Sendesignal TX-10 mit einem dominanten Start-of-Frame-Bit (SOF-Bit) beginnt. Darauf folgen ein bit2 bis bit4 mit dem gleichen Pegel wie das Start-of-Frame-Bit. Das sich an das bit4 anschließende Bit 52 wird rezessiv gesendet und hat damit einen anderen Pegel als die vorausgehenden Bits.

Demzufolge ergibt sich das dem Sendesignal TX-10 entsprechende Empfangssignal RX-20 in Fig. 8. Dieses Empfangssignal RX-20 kann aus verschiedenen Gründen (Hardwarefehler, externe Störungen, elektromagnetische Einstrahlung, etc.) für eine Zeitdauer T (in Figur 8 grau schattiert) einen dominanten Pegel aufweisen, obwohl das Sendesignal einen rezessiven Pegel des Leerlaufbits aufweist. In dem so verfälschten Empfangssignal RX-20 können zusätzlich kurze, rezessive Störimpulse GR vorhanden sein, welche das Bussignal 36 weiter verfälschen, wie in Fig. 8 gezeigt. Auch solche Störimpulse GR können beispielsweise durch externe Störungen, insbesondere elektromagnetische Einstrahlung etc., entstehen und werden möglicherweise, zum Beispiel, falls sie kürzer als die kleinste Buszeiteinheit von einem Time Quantum tq sind, durch die empfangende Teilnehmerstation, also hier die Teilnehmerstation 20, nicht erfasst. Das Empfangssignal RX-20 bleibt verfälscht.

Die Teilnehmerstation 20 sieht aufgrund des verfälschten Empfangssignals RX-20 das Signal V-20. Nach der Bitgrenze 50 zwischen den beiden Leerlaufbits 51 folgt die mit dem Bezugszeichen 54 versehene sync_seg-Phase. Darauf folgt die Übertragungsphase prop_seg, die auch in Fig. 8 mit dem Bezugszeichen 55 versehen ist. Darauf folgt die mit dem Bezugszeichen 56 versehene phase_segl und die mit dem Bezugszeichen 57 versehene phase_seg2. Die Reihenfolge der genannten Phasen 54 bis 57 ist für jedes der Bits gleich.

Auch hier tastet die Teilnehmerstation 20 das Empfangssignal RX-20 an Abtastpunkten SP1, SP2, SP3, SP4, SP5 ab. Die Abtastpunkte SP1 bis SP5 liegen zwischen der mit dem Bezugszeichen 56 versehenen phase_segl und der mit dem Bezugszeichen 57 versehenen phase_seg2.

Bei dem in Fig. 8 gezeigten Fall ist der CAN-Takt in den Teilnehmerstationen 10, 20, 30, die auch als Knoten bezeichnet werden, fRX_Knoten == fTX_Knoten. Das heißt der Empfangstakt entspricht dem Sendetakt. Hier ist eine Verkürzung/Verfälschung des zweiten Leerlaufbits 51 vor dem dominanten Start-of-Frame-Bit (SOF) von "phase_seg2 + ε" ausreichend, um das hier betrachtete Problem hervorzurufen. Der fünfte Abtastpunkt SP5 ergibt im dargestellten Fall fälschlicherweise einen dominanten Wert. Mit 1 Mbit/s und einem Abtastpunkt SP (SP = Sample Point) für die Abtastpunkte SP1, SP2, SP3, SP4, SP5 von 80% ist wieder eine Verkürzung um 205 ns ausreichend, um das hier betrachtete Problem zu erzeugen, wie zuvor beschrieben.

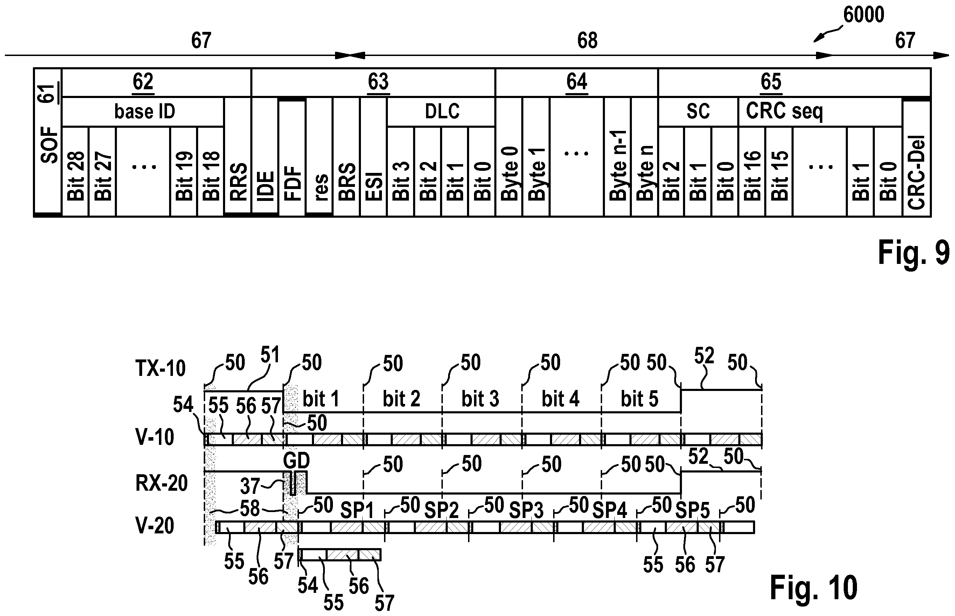

Fig. 9 zeigt als erstes Ausführungsbeispiel der vorliegenden Erfindung einen CAN FD Rahmen 6000 mit einem drei Bit breiten Stuff-Zählwert in einem SC-Feld, das am Anfang des Checksummenfelds 65 angeordnet ist. Gegenüber dem herkömmlichen CAN FD-Format gemäß Fig. 3 sind in den Rahmen 6000 also drei Stuff-Zähl-Bits im CRC-Feld eingefügt. Stuff-Bits sind nicht dargestellt.

Daher zählen bei dem vorliegenden Ausführungsbeispiel zur_Lösung des zuvor beschriebenen Problems für CRC-17 und CRC-21 Sender und Empfänger eines CAN FD Rahmens mit ihrer Sicherungseinrichtung 12, 22, 32 die Stuff-Bits 52, die vor dem Bereich liegen, in dem auf das Fixed-Stuff-Bit Verfahren umgeschaltet wird, also die Stuff-Bits 52 vor dem CRC-Feld bzw. Checksummenfeld 65. Der Zählerstand wird im gesendeten Rahmen 6000 im SC-Feld mit übertragen, wie in Fig. 9 gezeigt. Der Empfänger vergleicht den empfangenen Zählerstand des Felds SC mit seiner selbst gezählten Zahl der Stuff-Bits 52. Die Fixed-Stuff-Bits werden nicht mitgezählt. Falls sich die Zählerstände unterscheiden, wird dies behandelt wie ein CRC-Fehler, auch wenn die eigentliche CRC-Berechnung keinen Fehler zeigt.

Weil nur eine Hamming-Distanz von 6, es müssen also 5 Fehler erkannt werden, sichergestellt werden soll, reicht es aus, in der Sicherungseinrichtung 12, 22, 32 einen 3-Bit-Zähler zu verwenden. Der im SC-Feld übertragene Zählerstand zeigt also die Zahl der Stuff-Bits modulo 8. Es wären daher mindestens 8 Fehler notwendig, um diesen 3-Bit-Zählerstand (Stuff Count) unerkannt ungültig zu machen. Der 3-Bit-Zähler der Sicherungseinrichtung 22 kann in der CRC-Auswerteeinheit 22A umfasst sein. Selbstverständlich kann auch ein 4-Bit-Zähler usw. zum Einsatz kommen.

Gemäß Fig. 9 ist zur Übertragung des Stuff-Count-Wertes bzw. Zählerstandes des 3-Bit-Zählers der Sicherungseinrichtung 12, 22, 32 in dem Rahmen 6000 das CRC-Checksummenfeld 65 an seinem Anfang um drei Bits verlängert. Dies gilt gleichermaßen sowohl für die Rahmen 60, 70 mit 17-CRC Polynom als auch für die Rahmen 600, 700 mit 21-Bit-Polynom.

Weil durch die drei zusätzlichen Bits des SC-Felds auch ein weiteres Fixed-Stuff-Bit generiert wird, verlängert sich der CAN FD Rahmen 6000 durch dieses Verfahren um 4 Bits, unabhängig von der Zahl der Stuff-Bits 52, vom DLC-Feld oder von der Länge des Identifiers.

Der Stuff Count oder Stuff-Zählwert in CAN FD Rahmen 6000 wird in die CRC-Berechnung mit eingeschlossen, er wird also behandelt wie die Daten-Bits.

Wenn ein spezieller Bit-Fehler wie im Stand der Technik beschrieben von der CRC-Berechnung nicht entdeckt wird, führt dieser Fehler dazu, dass der Empfänger zu einem anderen Ergebnis beim Zählen der Stuff-Bits 52 kommt, der Fehler wird dann durch einen Vergleich der Stuff-Counts, also der vom Empfänger gezählten Stuff-Bits 52 und der im SC Feld angegebenen Anzahl der Stuff-Bits 52, erkannt, der Rahmen 6000 wird vom Empfänger als ungültig verworfen.

Alternativ können statt nur der Stuff-Bits 52 auch alle Bits im Rahmen 6000 gezählt werden, alternativ können auch Zählerstände verwendet werden, die mehr als drei Bits breit sind. In diesem Verfahren wird ein Stuff-Bit-Zählfehler behandelt wie ein CRC-Fehler, der Fehlerrahmen bzw. Error-Frame wird also erst nach dem ACK-Slot gesendet. Alternativ kann der Empfänger auch schon nach dem Empfang des letzten Bits des SC-Felds den Vergleich durchführen und einen Fehlerrahmen senden.

Gemäß einem zweiten Ausführungsbeispiel kann zur_Lösung des zuvor beschriebenen Problems für CRC-17 und CRC-21 als Initialisierungsvektor des CRC-Generators 13A, 23A, 33A anstelle von "0...0" der Initialisierungsvektor "1...0" verwendet werden. Die Initialisierung kann mit den Sicherungseinrichtungen 12, 22, 32, bei der Sicherungseinrichtung 22 insbesondere mit der CRC-Auswerteeinheit 22A und der Einfügeeinheit 22B, vorgenommen werden. Dadurch können die Probleme in Bezug auf die beiden kritischen Werte der Identifier-Bits ID28 bis ID25 von "0000" und "0001" nicht mehr auftreten.

Für das Problem, dass eine verfälschte "00000" Bitsequenz falsch erfasst wird, falls sie beginnt, wenn der Zwischen-CRC-Registerwert gleich "0...0" ist, welches Problem an einer beliebigen Bitposition zwischen SOF 61 (Start-of-Frame) und der gesendeten CRC-Checksumme oder CRC-Prüfsumme auftreten kann, kann mit dem Initialisierungsvektor von "1...0" ein Zwischen-CRC-Registerwert von "0...0" für die ersten 18 gesendeten Bits nicht auftreten.

Ansonsten ist bei dem zweiten Ausführungsbeispiel das Bussystem 1 auf die gleiche Weise aufgebaut, wie bei dem ersten Ausführungsbeispiel beschrieben.

Bei einem dritten Ausführungsbeispiel ist das Bussystem 1 auf die gleiche Weise aufgebaut, wie bei dem ersten Ausführungsbeispiel beschrieben. Im Unterschied dazu werden jedoch bei dem dritten Ausführungsbeispiel anhand von Fig. 10 die folgenden zwei Probleme betrachtet.

Falls in einem ersten Fall der Zwischen-CRC-Registerwert gleich "0...0" ist, während eine gestuffte Sequenz von "0" gesendet wird und das erste dieser "0"-Bits durch Synchronisation verkürzt ist, was durch Rauschen auf dem Bus verursacht wird, dann kann die Bitsequenz von "00000I" ("I" steht hier für ein gesendetes Stuff-Bit) als "00001" vom Empfänger verfälscht abgetastet werden, wie in Fig. 10 gezeigt. Die Verkürzung bzw. Verfälschung kann wieder die genannten Ursachen (Hardwarefehler, externe Störungen, elektromagnetische Einstrahlung, etc.) haben. Auch zusätzlich dominante Störimpulse GD können die Synchronisation störend beeinflussen. Auch die immer vorhandene Signalverschiebung 58 durch Buslaufzeiten ist hier zu beachten. Das heißt, dass unter Umständen nur vier "0"-Bits anstelle von fünf abgetastet werden. Dieser Fehler wird durch die CRC-Berechnung nicht erfasst. In Fig. 10 ist zusätzlich zu den Signalverläufen TX-10, RX-20, V-20 analog zu Fig. 7 und Fig. 8 noch der Signalverlauf T10 gezeigt, welcher der Sicht der Teilnehmerstation 10 entspricht. Gemäß Fig. 10 wird nach einem rezessiven Bit oder einem Leerlaufbit 52 eine Folge von fünf dominanten Bits, nämlich ein bit1 bis bit5 gesendet. Danach wird ein Stuff-Bit 52 eingefügt.

Der Fall von Fig. 10 kann auftreten, wenn BitzeitRX_Knoten > BitzeitTX_Knoten (BitTimeRX_node > BitTimeTX_node) aufgrund von Takttoleranz gilt, wobei Knoten für eine der Teilnehmerstationen 10, 20, 30 als Sender oder Empfänger steht.

Anstelle einer Korrektur des Phasenfehlers führt das Rauschen zu keiner Korrektur des Phasenfehlers oder sogar eine Korrektur in die falsche Richtung.

Falls in einem zweiten Fall der Zwischen-CRC-Registerwert gleich "0...0" ist, während eine nicht gestuffte Sequenz "00001" übertragen wird und das erste dieser "0" Bits durch Synchronisation verlängert wird, was wiederum durch Rauschen auf dem Bus verursacht wird, dann kann die Bitsequenz von "00001" als "00000I" ("I" steht hier für ein gesendetes Stuff-Bit) vom Empfänger verfälscht abgetastet werden. Das bedeutet, dass fünf "0"-Bits anstelle von vier abgetastet werden. Die "1" in dieser Sequenz wird als eine stuff-"1" interpretiert und wird entfernt. Die Einfügung wird durch die CRC-Berechnung nicht erfasst.

Dieser Fall kann auftreten, falls BitzeitRX_Knoten > BitzeitTX_Knoten (BitTimeRX_node < BitTimeTX_node) aufgrund von Takttoleranz gilt und nur, falls die Abtastpunktposition früh liegt. Auch dies ist aus Fig. 10 ersichtlich.

Der umgekehrte Fall - Empfangen der "11111" Bitsequenz - ist aus den folgenden Gründen kein Problem. Eine hereinkommende "1" kann sich in der CRC ändern in (0...0). Die folgende "1" führt zu einer CRC, die von (0...0) verschieden ist, für mehr als 17 Bits. Ein Problem kann nur auftreten, falls der CRC-Wert während dieser "1"-Sequenz nicht ändert. Dies ist jedoch nicht der Fall.

Als Lösung für das zuvor genannte Problem können die Sicherungseinrichtungen 12, 22, 32 gemäß den folgenden Möglichkeiten vorgehen, die alternativ oder in beliebiger Kombination verwendbar sind.
a) Nehme Stuff-Bits von einer CRC-Berechnung aus, wie bei Classic CAN.
b) Verwende fixiertes Stuff-Bit entweder in dem gesamten Rahmen oder beginnend mit der FDF-Bitposition, was kompatibel mit Classic CAN-Rahmen ist,.
c) Füge ein zusätzliches virtuelles Bit in die CRC-Checksumme bei der Berechnung ein. Dies löst jedoch das Problem nicht, da es den Hamming-Abstand in einem speziellen Fall auf 1 verschlechtert. Wenn ein CRC-Register einen Wert von "0...0" in einem FD-Rahmen erreicht, füge eine "1" in die CRC-Logik bei einer zusätzlichen Auswertung des CRC-Mechanismus ein. Nimm dies vor der Auswertung des nächsten empfangenen/gesendeten Bits vor. Die eingefügte "1" kann als ein virtuelles Stuff-Bit angesehen werden, das nur für die CRC-Logik sichtbar ist, es ändert den kritischen Wert von "0...0" in dem CRC-Register bevor das nächste empfangene/gesendete Bit ausgewertet wird.
d) Sende eine zweite CRC-Sequenz innerhalb des Rahmens.
e) Sende die Anzahl von Stuff-Bits 52 innerhalb des Rahmens (weniger Überhang als bei den Möglichkeiten b) oder d)). Ein Ausführungsbeispiel für diese Möglichkeit wurde vorstehend als erstes Ausführungsbeispiel beschrieben. Im Folgenden werden weitere Ausführungsbeispiele ausgeführt.

In einem formaleren Ansatz wird für eine Problembehandlung ein Fehlermodell eingeführt, wie folgt.
- Fehlertyp A: Bit Flip bzw. Bitumschlag. Die CRC- Berechnung ist ein gültiges Verfahren, um einen solchen Fehler zu erfassen, und stellt die gewünschte Hammingdistanz (HD-Level) bereit.
- Fehlertyp B (zuvor genannte Probleme): Verkürzung oder Verlängerung der Bitsequenz in Verbindung mit Stuff-Bits 52. Dies führt nicht zu einem Rahmenlängenfehler, wie zuvor beschrieben. Eine Verkürzung oder Verlängerung kann mehrere Male pro Rahmen 60, 70, 600, 700, 6000 vorkommen. Innerhalb eines Rahmens 60, 70, 600, 700, 6000 ist entweder eine Verkürzung oder eine Verlängerung möglich, die durch die Beziehung zwischen dem Sender- und Empfänger-Taktverhältnis bestimmt wird. Um diesen Fehlertyp zu erfassen, muss der Empfänger die Rahmenlänge wissen, einschließlich der Anzahl von Stuff-Bits 52.

Hierzu ist anzumerken, dass das CRC-Ergebnis zuverlässig ist, falls der CRC-Algorithmus exakt für dieselbe Anzahl von Bit (Rahmenlänge) auf Sende- und Empfängerseite angewendet wird. Ansonsten, also wenn weniger oder mehr Bits in dem Empfänger auf den CRC-Algorithmus angewendet werden, muss dies als beschädigt angesehen werden.

Für die folgenden Maßnahmen zum Abdecken der Fehlertypen A/B bildet die derzeitige (11.09.2014) ISO CD 11898-1 den Startpunkt. Die Robustheit der Datenintegrität von CAN FD sollte im Vergleich zu Classic CAN verbessert sein.

Die Verwendung von fixierten Stuff-Bits (vgl. Möglichkeit b) weiter oben) führt zu einer bekannten Anzahl von Bits, die von dem Empfänger erwartet werden. Die Rahmenlänge ist nicht variabel. Dies ist eine einfache Lösung, führt jedoch zu höherem Überhang, wodurch die Nettobitrate im Vergleich zu der derzeitigen ISO CD 11898-1 um ungefähr 10% fällt.

Gemäß einem vierten Ausführungsbeispiel werden bei einer weiteren Lösungsvariante zu den zuvor betrachteten Problemen zusätzlich Informationen über die Anzahl von Stuff-Bits 52 (Stuff-Bit-Zähler, Stuff-Bit-Count, SC) in dem Rahmen 6000 umfasst, wie in Fig. 9 gezeigt und in Bezug auf das erste Ausführungsbeispiel beschrieben. Die Informationen können auch als Längeninformationen bezeichnet werden.

Der Stuff-Bit-Zähler kann versendet werden, nachdem von einem klassischen CAN-Stuff-Verfahren zu einem Fixed-Stuff-Bit-Verfahren mit regelmäßig festgelegten Stuff-Bits gewechselt wird. Ansonsten könnte ein in die gesendete Stuff-Bit-Count Sequenz eingefügtes Stuff-Bit nicht im Stuff-Bit-Zähler mitgezählt sein.

Noch zusätzlich dazu wird bei dem vorliegenden vierten Ausführungsbeispiel eine Sicherheitsüberwachung der Längeninformation, also der Informationen über die Anzahl von Stuff-Bits 52 in dem Rahmen 6000, vorgenommen.

Tritt nämlich in einem Rahmen ein Fehlertyp B auf, ist die CRC-Checksumme beschädigt. Verfälscht in demselben Rahmen der Fehlertyp A den Stuff-Bit-Zählstand der Sicherungseinrichtungen 12, 22, 32, dann kann der Empfänger einen verfälschten Rahmen nicht erfassen.

Dies macht es erforderlich, die Sicherheit der gesendeten Längeninformation zusätzlich zu überwachen (Stuff-Bit-Zählwert Modulo 8).

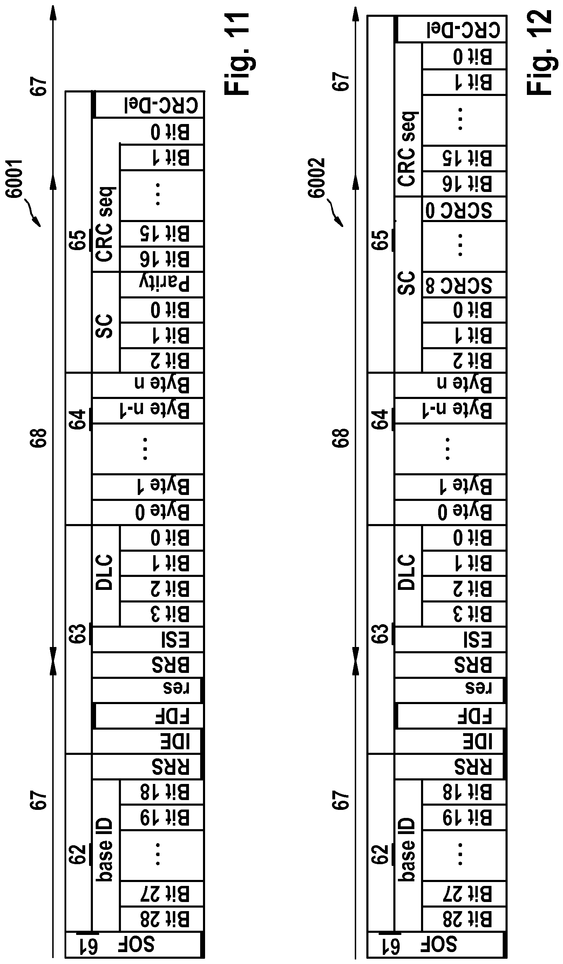

Daher wird gemäß Fig. 11 in einem Rahmen 6001 ein Parity-Bit als Absicherungsinformation an das SC-Feld angefügt, so dass auch das Parity-Bit vor dem Checksummenfeld 65 übertragen wird. Das Parity-Bit ist eigentlich das immer eingefügte feste Stuff-Bit. Die Sicherheitseinrichtungen 12, 22, 32 ändern das Parity-Bitje nachdem, ob die CRC-Checksumme beschädigt ist oder nicht. Dadurch kann auch bei gleichzeitigem Auftreten der Fehlertypen A und B ein beschädigter Rahmen 6001 sicher erkannt werden.

Gemäß einem fünften Ausführungsbeispiel werden bei einer weiteren Lösungsvariante weitere Informationen, nämlich separate CRC-Checksummen für den Inhalt des Stuff-Bit-Zählers berechnet und beispielsweise für eine 9-Bit CRC als Bits SCRC8 bis SCRC0 in einen Rahmen 6002 als Absicherungsinformation umfasst, wie in Fig. 12 gezeigt. Eine mögliche CRC-Checksumme mit 9-Bit ist die bekannte DARC-8 CRC mit dem Generator-Polynom x⁸ + x⁵ + x⁴ + x³ + 1. Es kann auch eine 5-Bit CRC Checksumme verwendet werden, mit etwas geringerer Absicherung (Hamming Distance HD). In den Bits SCRC8 bis SCRC0 sind die mittels des Generatorpolynoms ermittelten Werte der Checksumme über den Zählwert der Stuff-Bits in dem Rahmen 6002 enthalten. Auch auf diese Weise kann beispielsweise bei einem gleichzeitigen Auftreten der Fehlertypen A und B ein beschädigter Rahmen 6002 sicher erkannt werden.

Die folgende Tabelle 3 zeigt die zuvor beschriebenen verschiedenen Lösungen im Überblick. Die Gesamtlänge des CRC Feldes ergibt sich aus der Länge der CRC, der Länge des Stuff-Bit-Zählers, der Länge der zusätzlichen Absicherungsinformation, und der Anzahl von eingefügten Fixed-Stuff-Bits. Es steht "SC" für Stuff-Bit-Count oder Stuff-Bit-Zähler und "f.s." für Fixed Stuff-Bits.

**Tabelle 3**

| Lösung Nr | Länge von CRC-Feld: SC + sicherh.überw. + f.s. | Beschreibung | Sicherheits-auswertung | Kommentare |
|---|---|---|---|---|
| 1 | 17+3+0+6 | | Sicherheitsüberwachung nur durch Rahmen-CRC | Geringster Überhang |
| | 21+3+0+7 | | | |
| 2 | 17+3+1+6 | Stuff-Bit-Zählwert Gray-codiert mit Parity-Bit bei LSB, folgendes festes Stuff-Bit zu Parity-Bit invertieren | HD3 + 1 Fehler in Rahmen | Besser als Classic CAN |
| | 21+3+1+7 | | = HD4 | |
| | | | | |
| 3 | 17+3+5+7 | | HD4 + 1 Fehler in Rahmen = HD5 | |
| | 21+3+5+8 | | | |
| 4 | 17+3+9+8 | DARC-8 CRC | HD5 + 1 Fehler in Rahmen = HD6 | DLC könnte auch in diese CRC umfasst werden, da er bis zu 9 Bits sicherheitsmäßig überwacht |
| | 21+3+9+9 | x⁸+x⁵+x⁴+x³+1 | | |

Hierbei entspricht die Lösungsnummer 1 in der Tabelle 3 dem ersten Ausführungsbeispiel. Die Lösungsnummer 2 in der Tabelle 3 entspricht dem vierten Ausführungsbeispiel. Die Lösungsnummer 3 in der Tabelle 3 entspricht einer Variante des fünften Ausführungsbeispiels mit 5-Bit-CRC. Die Lösungsnummer 4 in der Tabelle 3 entspricht der weiteren Variante des fünften Ausführungsbeispiels mit 9-Bit-CRC.

Alle zuvor beschriebenen Ausgestaltungen des Bussystems 1, der Teilnehmerstationen 10, 20, 30 und des Verfahrens können einzeln oder in allen möglichen Kombinationen Verwendung finden. Insbesondere können alle Merkmale der zuvor beschriebenen Ausführungsbeispiele beliebig kombiniert oder weggelassen werden. Zusätzlich sind insbesondere folgende Modifikationen denkbar.

Das zuvor beschriebene Bussystem 1 gemäß den Ausführungsbeispielen ist anhand eines auf dem CAN FD Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10 bis 30 in dem Bussystem 1 der Ausführungsbeispiele und deren Modifikationen ist beliebig. Insbesondere können auch nur Teilnehmerstationen 10 oder 20 oder 30 in dem Bussystem 1 vorhanden sein. Es sind beliebige Kombinationen der Teilnehmerstationen 10 bis 30 in den Bussystemen 1 möglich.

Die Sicherungseinrichtungen 12, 22, 32 können, anstelle der für sie in Fig. 1 gezeigten Ausführung, jeweils auch in der zugehörigen Kommunikationssteuereinrichtung 11, 21, 31 vorgesehen sein. Auch eine oder mehrere solcher Teilnehmerstationen kann/können alternativ oder zusätzlich zu den Teilnehmerstationen 10, 20, 30 in beliebiger Kombination mit den Teilnehmerstationen 10, 20, 30 in dem Bussystem 1 vorhanden sein.

## Patentansprüche

1. Verfahren zur seriellen Übertragung von Rahmen (6000; 6001; 6002) über eine Busleitung (3) von einem Sender zu mindestens einem Empfänger, wobei vom Sender in die Rahmen (6000; 6001; 6002) Stuff-Bits (52) zur Erzeugung zusätzlicher Signalflanken und abhängig von den Werten mehrerer vorausgegangener Bits eingefügt werden,
wobei
der Sender des Rahmens (6000; 6001; 6002) die Stuff-Bits (52) zählt, die abhängig von den Werten mehrerer vorausgegangener Bits eingefügt werden, und wobei die Anzahl gezählter Stuff-Bits (52) in dem gesendeten Rahmen (6000; 6001; 6002) mit übertragen wird.

2. Verfahren nach Anspruch 1,
wobei zusätzlich zu der Anzahl gezählter Stuff-Bits (52) eine weitere Absicherungsinformation betreffend die gezählte Anzahl von Stuff-Bits (52) in dem gesendeten Rahmen (6000; 6001; 6002) mit übertragen wird.

3. Verfahren nach einem der vorangehenden Ansprüche,
wobei der Empfänger des Rahmen (6000; 6001; 6002) die Stuff-Bits (52) abhängig von den Werten mehrerer vorausgegangener Bits zählt und mit der Information vergleicht, die über die Anzahl gezählter Stuff-Bits (52) in dem gesendeten Rahmen (6000; 6001; 6002) mit übertragen wird, und
wobei der Empfänger den empfangenen Rahmen (6000; 6001; 6002) verwirft, wenn die vom Empfänger in dem empfangenen Rahmen (6000; 6001; 6002) gezählten Stuff-Bits (52) ungleich der Anzahl gezählter Stuff-Bits (52) ist, die in dem gesendeten Rahmen (6000; 6001; 6002) mit übertragen wird.

4. Verfahren nach einem der vorangehenden Ansprüche,
wobei in einem ersten Teil des Rahmens (6000; 6001; 6002) Stuff-Bits (52) abhängig von den Werten mehrerer vorausgegangener Bits eingefügt werden, wobei in einem zweiten Teil des Rahmens (6000; 6001; 6002) Stuff-Bits (52) als Fixed-Stuff-Bits an festgelegten Positionen eingefügt werden,
wobei der Sender des Rahmens (6000; 6001; 6002) die Stuff-Bits (52) zählt, die vor dem Bereich liegen, in dem auf das Fixed-Stuff-Bit Verfahren umgeschaltet wird, und
wobei die Anzahl gezählter Stuff-Bits (52) in dem gesendeten Rahmen (6000; 6001; 6002) mit übertragen wird.

5. Verfahren nach einem der vorangehenden Ansprüche,
wobei der Rahmen (6000; 6001; 6002) einen Kopfteil (61, 62, 63), einen Datenteil (64) und einen Schlussteil (65) aufweist,
wobei der Kopfteil (61, 62, 63) einen Identifier (62) umfasst,
wobei der Rahmen (6000; 6001; 6002) eine CRC-Checksumme (65) umfasst, und
wobei die Anzahl gezählter Stuff-Bits (62) im Schlussteil (65) des gesendeten Rahmens (6000; 6001; 6002) vor der CRC-Checksumme mit übertragen wird.

6. Verfahren nach Anspruch 5,
wobei die Anzahl gezählter Stuff-Bits (52) in die Berechnung der CRC-Checksumme mit eingeschlossen wird.

7. Verfahren nach Anspruch 5 oder 6,
wobei zwischen der Anzahl gezählter Stuff-Bits (52) und der CRC-Checksumme ein Fixed-Stuff-Bit eingefügt wird, das als Parity-Bit eine Absicherungsinformation über die Anzahl gezählter Stuff-Bits (52) enthält.

8. Verfahren nach einem der vorangehenden Ansprüche,
wobei zum Zählen der Stuff-Bits ein 3-Bit-Zähler verwendet wird.

9. Teilnehmerstation (10; 20; 30) für ein Bussystem (1), mit einer Sende-/Empfangseinrichtung (13; 23; 33) zum Senden eines Rahmens (6000; 6001; 6002) an und/oder Empfangen eines Rahmens (6000; 6001; 6002) von eine/r weitere/n Teilnehmerstation des Bussystems (1), mit welchem der Rahmen (6000; 6001; 6002) mittels serieller Übertragung über eine Busleitung (3) von einem Sender zu mindestens einem Empfänger übertragbar ist, und
einer Sicherungseinrichtung (12; 22; 32) zur Sicherung einer Anzahl von in den Rahmen (6000; 6001; 6002) eingefügten Stuff-Bits (52),
wobei die Sende-/Empfangseinrichtung (13; 23; 33) ausgestaltet ist, vor dem Senden eines Rahmens (6000; 6001; 6002) in den Rahmen (6000; 6001; 6002) gemäß einer vorbestimmten Regel Stuff-Bits (52) zur Erzeugung zusätzlicher Signalflanken und abhängig von den Werten mehrerer vorausgegangener Bits einzufügen und/oder beim Auswerten eines empfangenen Rahmens (6000; 6001; 6002) die Stuff-Bits (52) wieder zu entfernen, und
wobei die Sicherungseinrichtung (12; 22; 32) ausgestaltet ist, die Stuff-Bits (52) zu zählen, die abhängig von den Werten mehrerer vorausgegangener Bits eingefügt werden, und die Anzahl gezählter Stuff-Bits (52) in den Rahmen (6000; 6001; 6002) einzufügen, so dass die Anzahl in dem gesendeten Rahmen (6000; 6001; 6002) mit übertragen wird.

10. Bussystem (1), mit
einer Busleitung (3), und
mindestens zwei Teilnehmerstationen (10, 20, 30), welche über die Busleitung (3) derart miteinander verbindbar sind, dass sie miteinander kommunizieren können,
wobei mindestens eine der mindestens zwei Teilnehmerstationen (10, 20, 30) eine Teilnehmerstation (10; 20; 30) nach Anspruch 9 ist.

## Claims

1. Method for serially transmitting frames (6000; 6001; 6002) from a transmitter to at least one receiver via a bus line (3), wherein stuff bits (52) for generating additional signal edges are inserted into the frames (6000; 6001; 6002) by the transmitter, as a function of the values of 'a plurality of preceding bits,
wherein
the transmitter of the frame (6000; 6001; 6002) counts the stuff bits (52) which are inserted as a function of the values of a plurality of preceding bits, and wherein the number of counted stuff bits (52) is also transmitted in the transmitted frame (6000; 6001; 6002).

2. Method according to Claim 1,
wherein in addition to the number of counted stuff bits (52) further protection information relating to the counted number of stuff bits (52) is also transmitted in the transmitted frame (6000; 6001; 6002).

3. Method according to one of the preceding claims, wherein the receiver of the frame (6000; 6001; 6002) counts the stuff bits (52) as a function of the values of a plurality of preceding bits and compares them with the information which is also transmitted about the number of counted stuff bits (52) in the transmitted frame (6000; 6001; 6002), and
wherein the receiver rejects the received frame (6000; 6001; 6002) if the stuff bits (52) counted by the receiver in the received frame (6000; 6001; 6002) are unequal to the number of counted stuff bits (52) which is also transmitted in the transmitted frame (6000; 6001; 6002).

4. Method according to one of the preceding claims, wherein stuff bits (52) are inserted in a first part of the frame (6000; 6001; 6002) as a function of the values of a plurality of preceding bits,
wherein stuff bits (52) are inserted in a second part of the frame (6000; 6001; 6002) as fixed stuff bits at defined positions,
wherein the transmitter of the frame (6000; 6001; 6002) counts the stuff bits (52) which are located before the region in which switching over to the fixed stuff bit method takes place, and
wherein the number of counted stuff bits (52) is also transmitted in the transmitted frame (6000; 6001; 6002).

5. Method according to one of the preceding claims, wherein the frame (6000; 6001; 6002) has a header part (61, 62, 63), a data part (64) and an end part (65), wherein the header part (61, 62, 63) comprises an identifier (62),
wherein the frame (6000; 6001; 6002) comprises a CRC checksum (65),
and
wherein the number of counted stuff bits (62) is also transmitted in the end part (65) of the transmitted frame (6000; 6001; 6002) before the CRC checksum.

6. Method according to Claim 5,
wherein the number of counted stuff bits (52) is also included in the calculation of the CRC checksum.

7. Method according to Claim 5 or 6,
wherein a fixed stuff bit is inserted between the number of counted stuff bits (52) and the CRC checksum, which fixed stuff bit contains, as a parity bit, protection information about the number of counted stuff bits (52).

8. Method according to one of the preceding claims, wherein a 3-bit counter is used for counting the stuff bits.

9. User station (10; 20; 30) for a bus system (1), having
a transceiver device (13; 23; 33) for transmitting a frame (6000; 6001; 6002) to and/or receiving a frame (6000; 6001; 6002) from one other user station of the bus system (1), with which the frame (6000; 6001; 6002) can be transmitted by means of serial transmission from a transmitter to at least one receiver via a bus line (3), and
a protection device (12; 22; 32) for protecting a number of stuff bits (52) which are inserted into the frame (6000; 6001; 6002),
wherein the transceiver device (13; 23; 33) is configured to insert into a frame (6000; 6001; 6002), before the transmission of said frame (6000; 6001; 6002), stuff bits (52), according to a predetermined rule, for generating additional signal edges, as a function of the values of a plurality of preceding bits and/or to remove the stuff bits (52) again when a received frame (6000; 6001; 6002) is evaluated, and
wherein the protection device (12; 22; 32) is configured to count the stuff bits (52) which are inserted as a function of the values of a plurality of preceding bits and to insert the number of counted stuff bits (52) into the frame (6000; 6001; 6002), with the result that the number is also transmitted in the transmitted frame (6000; 6001; 6002).

10. Bus system (1) having
a bus line (3), and
at least two user stations (10, 20, 30) which can be connected to one another via the bus line (3) in such a way that they can communicate with one another,
wherein at least one of the at least two user stations (10, 20, 30) is a user station (10; 20; 30) according to Claim 9.

## Revendications

1. Procédé de transmission en série de trames (6000 ; 6001 ; 6002) sur une ligne de bus (3) d'un émetteur à au moins un récepteur, des bits de remplissage (52) étant insérés dans les trames (6000 ; 6001 ; 6002) par l'émetteur en vue de générer des fronts de signal supplémentaires et en fonction des valeurs de plusieurs bits précédents,
l'émetteur de la trame (6000 ; 6001 ; 6002) comptant les bits de remplissage (52) qui sont insérés en fonction des valeurs de plusieurs bits précédents,
et le nombre de bits de remplissage (52) comptés étant transmis conjointement dans la trame (6000 ; 6001 ; 6002) émise.

2. Procédé selon la revendication 1, une information de protection supplémentaire concernant le nombre compté de bits de remplissage (52) étant transmis conjointement dans la trame (6000 ; 6001 ; 6002) émise en plus du nombre de bits de remplissage (52) comptés.

3. Procédé selon l'une des revendications précédentes, le récepteur de la trame (6000 ; 6001 ; 6002) comptant les bits de remplissage (52) en fonction des valeurs de plusieurs bits précédents et comparant le résultat à l'information qui est transmise conjointement dans la trame (6000 ; 6001 ; 6002) émise en plus du nombre de bits de remplissage (52) comptés et
le récepteur rejette la trame (6000 ; 6001 ; 6002) reçue lorsque le nombre de bits de remplissage (52) comptés par le récepteur dans la trame (6000 ; 6001 ; 6002) reçue est différent du nombre de bits de remplissage (52) comptés qui sont transmis dans la trame (6000 ; 6001 ; 6002) émise.

4. Procédé selon l'une des revendications précédentes,
des bits de remplissage (52) étant insérés dans une première partie de la trame (6000 ; 6001 ; 6002) en fonction des valeurs de plusieurs bits précédents,
des bits de remplissage (52) étant insérés dans une deuxième partie de la trame (6000 ; 6001 ; 6002) sous la forme de bits de remplissage fixes à des positions définies,
l'émetteur de la trame (6000 ; 6001 ; 6002) comptant les bits de remplissage (52) qui se trouvent avant la zone dans laquelle s'effectue le basculement sur le procédé des bits de remplissage fixes, et
le nombre de bits de remplissage (52) comptés étant transmis conjointement dans la trame (6000 ; 6001 ; 6002) émise.

5. Procédé selon l'une des revendications précédentes,
la trame (6000 ; 6001 ; 6002) possédant une partie d'entête (61, 62, 63), une partie de données (64) et une partie finale (65),
la partie d'en-tête (61, 62, 63) comportant un identificateur (62),
la trame (6000 ; 6001 ; 6002) comportant une somme de contrôle CRC (65),
le nombre de bits de remplissage (62) comptés étant transmis dans la partie finale (65) de la trame (6000 ; 6001 ; 6002) émise avant la somme de contrôle CRC.

6. Procédé selon la revendication 5, le nombre de bits de remplissage (52) comptés étant inclus dans le calcul de la somme de contrôle CRC.

7. Procédé selon la revendication 5 ou 6, un bit de remplissage fixe étant inséré entre le nombre de bits de remplissage (52) comptés et la somme de contrôle CRC, lequel fait office de bit de parité et contient une information de protection à propos du nombre de bits de remplissage (52) comptés.

8. Procédé selon l'une des revendications précédentes, un compteur à 3 bits étant utilisé pour compter les bits de remplissage.

9. Station d'abonné (10 ; 20 ; 30) pour un système de bus (1), comprenant
un dispositif émetteur/récepteur (13 ; 23 ; 33) destiné à émettre une trame (6000 ; 6001 ; 6002) et/ou à recevoir une trame (6000 ; 6001; 6002) de la part d'une ou plusieurs stations d'abonné supplémentaires du système de bus (1), avec lequel la trame (6000 ; 6001 ; 6002) peut être transmise d'un émetteur à au moins un récepteur au moyen d'une transmission série sur une ligne de bus (3), et
un dispositif de protection (12 ; 22 ; 32) destiné à protéger un nombre de bits de remplissage (52) insérés dans la trame (6000 ; 6001 ; 6002),
le dispositif émetteur/récepteur (13 ; 23 ; 33) étant configuré pour, avant d'émettre une trame (6000 ; 6001 ; 6002), insérer dans la trame (6000 ; 6001 ; 6002) des bits de remplissage (52) conformément à une règle prédéterminée en vue de générer des fronts de signal supplémentaires et en fonction des valeurs de plusieurs bits précédents et/ou pour de nouveau supprimer les bits de remplissage (52) avant l'interprétation d'une trame (6000 ; 6001 ; 6002) reçue, et
le dispositif de protection (12; 22; 32) étant configuré pour compter les bits de remplissage (52) qui ont été insérés en fonction des valeurs de plusieurs bits précédents et d'insérer le nombre de bits de remplissage (52) comptés dans la trame (6000 ; 6001 ; 6002) de sorte que le nombre soit transmis conjointement dans la trame (6000 ; 6001 ; 6002) émise.

10. Système de bus (1), comprenant
une ligne de bus (3) et
au moins deux stations d'abonné (10, 20, 30) qui peuvent être reliées ensemble par le biais de la ligne de bus (3) de telle sorte qu'elles peuvent communiquer entre elles, au moins l'une des deux stations d'abonné (10, 20, 30) étant une station d'abonné (10; 20; 30) selon la revendication 9.
